# EUROPÄISCHE PATENTSCHRIFT

(11) **EP 0 773 433 B1**
(45) Veröffentlichungstag und Bekanntmachung des Hinweises auf die Patenterteilung: **25.02.2004**
(21) Anmeldenummer: 96117675.7
(22) Anmeldetag: 05.11.1996
(51) Int. Cl.: G01F 23/284

(54) **Durchführung für ein elektrisches Hochfrequenzsignal**
Feedthrough for an electric high-frequency signal
Traversée pour un signal électrique à haute fréquence

(30) Priorität: 09.11.1995 DE 19541669
(43) Veröffentlichungstag der Anmeldung: 14.05.1997
(73) Patentinhaber: Krohne AG, 4019 Basel (CH)
(72) Erfinder: Nicolas, Christian, F-26000 Valence (FR)
(74) Vertreter: Gesthuysen, von Rohr & Eggert

(56) Entgegenhaltungen:
- EP-A- 0 534 654
- DE-A- 4 404 745
- FR-A- 2 591 040
- US-A- 3 703 829
- US-A- 3 812 422
- US-A- 4 226 118
- US-A- 4 359 902
- US-A- 4 664 477

## Beschreibung

Die Erfindung betrifft eine Durchführung für ein von einer Signalquelle kommendes elektrisches Hochfrequenzsignal, mit einem das elektrische Hochfrequenzsignal führenden Leiter, mit einem mechanischen Trägerelement und mit zwei zwischen dem Leiter und dem Trägerelement vorgesehenen Isolationselementen.

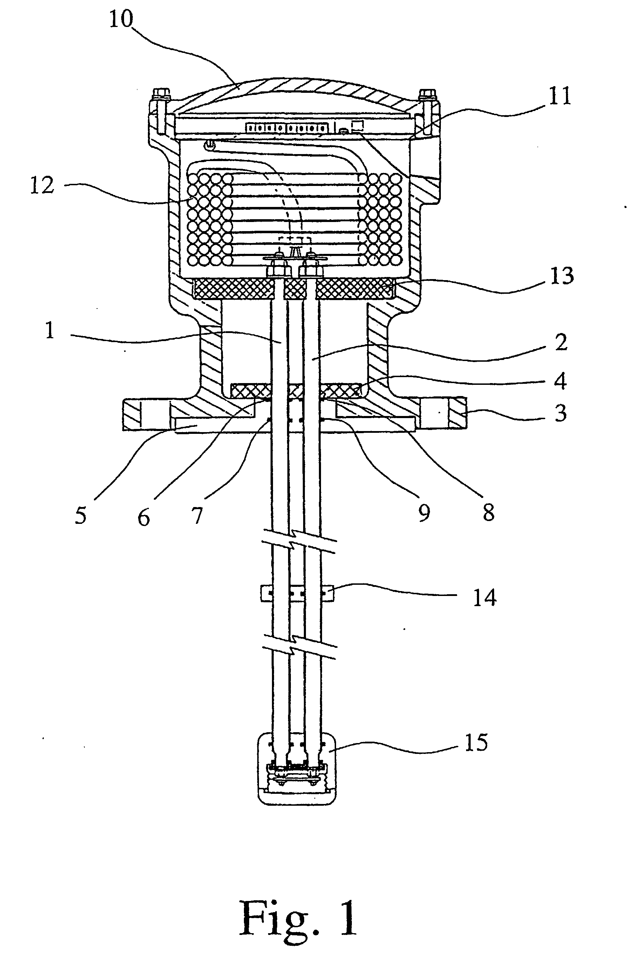

Derartige Durchführungen für elektrische Hochfrequenzsignale sind betriebsinternen technischen Kenntnissen zufolge bekannt (vgl. Fig. 1 der Zeichnung). Diese Durchführungen für elektrische Hochfrequenzsignale dienen, wie die erfindungsgemäße Durchführung für ein elektrisches Hochfrequenzsignal, dazu, das elektrische Hochfrequenzsignal von einem, regelmäßig normalen Umgebungsbedingungen unterliegenden Außenraum in einen, besonderen Umgebungsbedingungen, wie etwa hohem oder niedrigem Druck, hohen oder niedrigen Temperaturen und einer chemisch agressiven Atmosphäre, unterliegenden Innenraum durchzuführen oder umgekehrt von dem Innenraum in den Außenraum durchzuführen. Eine solche Durchführung besteht aus mindestens einem das elektrische Hochfrequenzsignal führenden Leitelement, in der Regel einen metallischen, elektrischen Leiter, einem der Befestigung und Stabilität dienenden mechanischen Trägerelement, das in der Regel ebenfalls aus Metall besteht und zur Vermeidung eines elektrischen Kontaktes zwischen dem Leitelement und dem Trägerelement einem oder mehreren Isolationselementen zwischen dem Leitelement und dem Trägerelement. Eine derartige Durchführung für elektrische Hochfrequenzsignale ist auch aus dem Stand der Technik bekannt, nämlich aus der DE 44 04 0745 A1. Betriebsintern ist ferner bekannt, zwischen dem Leitelement und dem Trägerelement, zwei, unterschiedliche Funktionen übernehmende Isolationselemente anzuordnen. Im Stand der Technik dient das erste Isolationselement zur Abdichtung des Innenraums gegenüber dem Außenraum und das zweite Isolationselement zur Herstellung einer gewissen Druckfestigkeit und einer bestimmten Beständigkeit gegen chemisch agressive Atmosphären oder Medien.

In der US 3,703,829 ist ein Füllstandsmeßgerät beschrieben, bei dem elektrische Impulse zwischen zwei Leitern geführt und an der Grenzfläche zwischen zwei Medien aufgrund der dort vorhandenen Änderung der Dielektrizitätskonstanten wenigstens teilweise zurückreflektiert werden. Dabei ist beschrieben, die Impedanz eines Isolationselements durch die Änderung seiner Geometrie zu beeinflussen. Die US 4,664,477 zeigt außerdem eine Durchführung für ein Hochfrequenzsignal, bei der ein Kunststoffmaterial, nämlich Teflon, für ein Isolationselement verwendet wird. Aus der US 4,359,902 ist schließlich eine Mikrowellendurchführung bekannt, die ein Isolationselement aus Keramik aufweist.

Bei Durchführungen für elektrische Hochfrequenzsignale ist es nun, insbesondere für Signale mit extrem hohen Frequenzen, problematisch, daß diese an den Übergängen zwischen den Isolationselementen reflektiert werden und somit nicht vollständig in den Innen- bzw. Außenraum durchführbar sind. Neben diesen Verlusten ist weiter problematisch, daß die Reflektion der Hochfrequenzsignale an diesen Übergängen zwischen den Isolationselementen bei Verfahren zur Messung der Laufzeit von Hochfrequenzsignalen zu Schmutzeffekten führen, die in der Regel unerwünscht sind.

Gegenüber dem geschilderten Stand der Technik liegt der Erfindung die Aufgabe zugrunde, eine solche Durchführung für ein von einer Signalquelle kommendes elektrisches Hochfrequenzsignal zur Verfügung stellen, die problemlos die erforderliche Abdichtung gewährleistet, hohen mechanischen Beanspruchungen gewachsen ist und ihre hochfrequenztechnische Aufgabe uneingeschränkt erfüllt.

Die zuvor aufgezeigte Aufgabe ist erfindungsgemäß dadurch gelöst, daß das erste, der elektrischen Signalquelle zugewandte Isolationselement gegenüber dem Leiter und dem Trägerelement abgedichtet ist, aus mechanisch beständiger Keramik besteht und als Widerlager für das zweite Isolationselement dient, das zweite Isolationselement aus einem chemisch beständigen Kunststoff besteht und die geometrischen Abmessungen der Isolationselemente so auf die elektrischen Eigenschaften der Materialien der Isolationselemente abgestimmt sind, daß die Impedanzen der Isolationselemente übereinstimmen.

Erfindungsgemäß ist also gewährleistet, daß das Hochfrequenzsignal trotz sich verändernder Materialien in der Umgebung des Leitelementes stets nur eine gleichbleibende Impedanz "sieht". Durch die Abdichtung des ersten der elektrischen Signalquelle zugewandten Isolationselements gegenüber dem Leitelement und dem Trägerelement ist sichergestellt, daß beispielsweise eine aggressive Atmosphäre nicht in den Außenraum und somit in den Bereich der elektrischen Signalquelle austreten kann und dort also auch keinen Schaden anrichten kann.

Die Druckbeständigkeit der erfindungsgemäßen Durchführung für ein elektrisches Hochfrequenzsignal ist dadurch gewährleistet, daß das erste Isolationselement aus einer mechanisch beständigen Keramik besteht. Die somit erzielte Druckbeständigkeit ist sowohl für den Fall vonnöten, daß im Innenraum überhöhte Drücke auftreten können als auch für den Fall, daß die im Außenraum befindliche elektrische Signalquelle sich in einem abgeschlossenen, druckdichten, weil explosionsgeschützten, Behältnis befindet. Da sich das ferner zweite Isolationselement an dem ersten Isolationselement als Widerlager abstützt, ist kein zusätzliches, impedanzverändemdes Widerlager notwendig.

Erfindungsgemäß besteht das zweite Isolationselement aus einem chemisch beständigen Kunststoff - vorzugsweise Teflon. Durch diese gezielte Auswahl des Materials des zweiten Isolationselementes ohne Rücksicht auf dessen mechanische Eigenschaften ist eine hohe Beständigkeit der erfindungsgemäßen Durchführung für ein elektrisches Hochfrequenzsignal gegen chemisch aggressive Atmosphären im Innenraum gewährleistet.

Die erfindungsgemäße Durchführung für ein elektrisches Hochfrequenzsignal eignet sich besonders zum Einsatz in einem Zeitbereichsreflektometer (TIME-DOMAIN-REFLECTOMETRY (TDR)-Meßgerät) zur Einkopplung eines elektrischen Pulses von der elektrischen Signalquelle im Außenraum in eine Sonde im Innenraum beispielsweise eines Behälters zur Speicherung flüssiger oder fester Medien. Ein TDR-Meßgerät beruht auf der Tatsache, daß ein in einer Sonde geführtes elektrisches Hochfrequenzsignal, nämlich ein sehr kurzer Zeitpuls, an den an die Sonde angrenzenden Oberflächen der gespeicherten Medien mit unterschiedlichen elektrischen Eigenschaften reflektiert wird und somit aus der Laufzeit der reflektierten Signale die Höhe der jeweiligen Oberfläche im Behälter bestimmbar ist. Hinsichtlich einer genaueren Beschreibung eines TDR-Meßgerätes wird auf die Veröffentlichung "MULTI-PHASE FLUID LEVEL MEASUREMENT BY TIME-DOMAIN-REFLECTOMETRY", der Cambridge Consultants Ltd., vom 25. Februar 1993 verwiesen.

In der geschilderten Verbindung einer erfindungsgemäßen Durchführung für ein elektrisches Hochfrequenzsignal mit einem TDR-Meßgerät erfährt die erfindungsgemäße Durchführung eine besonders vorteilhafte Ausgestaltung dadurch, daß die Impedanz der erfindungsgemäßen Durchführung im wesentlichen mit der Impedanz auf dem Signalweg des TDR-Meßgerätes übereinstimmt. Eine derartige Impedanzanpassung gewährleistet eine vollständige Vermeidung von Reflektionen des Hochfrequenzsignals bis auf die gewünschten Reflektionen an Oberflächenspiegeln der gespeicherten Medien. Insgesamt ist also die Meßgenauigkeit eines derart ausgestalteten TDR-Meßgeräts deutlich verbessert.

Im einzelnen gibt es nun eine Vielzahl von Möglichkeiten, die erfindungsgemäße Durchführung für ein elektrisches Hochfrequenzsignal auszugestalten und weiterzubilden. Dazu wird verwiesen einerseits auf die dem Patentanspruch 1 nachgeordneten Patentansprüche, andererseits auf die Beschreibung eines bevorzugten Ausführungsbeispiels in Verbindung mit der Zeichnung. In der Zeichnung zeigt
- Fig. 1: teilweise geschnitten ein Ausführungsbeispiel einer betriebsinternen technischen Kenntnissen zufolge bekannten Durchführung für ein elektrisches Hochfrequenzsignal in Verbindung mit einem TDR-Meßgerät und
- Fig. 2: teilweise geschnitten ein Ausführungsbeispiel der erfindungsgemäßen Durchführung für ein elektrisches Hochfrequenzsignal in Verbindung mit einem TDR-Meßgerät.

In Fig. 1 der Zeichnung ist eine ketriebsintern bekannte Durchführung für ein elektrisches Hochfrequenzsignal in Verbindung mit einem TDR-Meßgerät dargestellt. Diese Durchführung weist auf zwei das elektrische Hochfrequenzsignal führende Leitelemente 1, 2, ein mit dem Gehäuse des TDR-Meßgerätes einstückig ausgeführtes mechanisches Trägerelement 3 und zwei, zwischen den Leitelementen 1, 2 und dem Trägerelement 3 vorgesehene Isolationselemente 4, 5. Das erste Isolationselement 4 und das zweite Isolationselement 5 sind derart ausgebildet, daß sie mechanisch in einer geeigneten Weise zusammenwirken. Eine Ausgestaltung der Isolationselemente 4, 5 im Hinblick auf die elektrischen Eigenschaften, insbesondere im Hinblick auf die Impedanz der Leitelemente 1, 2 für das elektrische Hochfrequenzsignal ist nicht erfolgt, was unzweifelhaft an dem sich verändernden Durchmesser des zweiten Isolationselementes und der sich damit verändernden Impedanz über die Länge der Leitelemente 1, 2 erkennbar ist.

Das erste Isolationselement übernimmt lediglich eine abdichtende Funktion, während das zweite Isolationselement einerseits die mechanische Stabilität der Durchführung und andererseits die Beständigkeit gegen chemisch agressive Atmosphären oder Medien der Durchführung gewährleistet. Außerdem übernimmt das zweite Isolationselement 5 in Verbindung mit den O-Ringen 6, 7, 8, 9 eine zusätzliche Abdichtungsfunktion.

Bei der betriebsintern bekannten Durchführung für ein elektrisches Hochfrequenzsignal ist somit also weder die Signalführung durch die Durchführung hindurch noch die Aufgabenverteilung zwischen dem ersten Isolationselement 4 und zweiten Isolationselement 5 optimal gelöst.

In Fig. 1 ist weiter noch dargestellt das mit dem mechanischen Trägerelement 3 einstückig ausgeführte Gehäuse des TDR-Meßgeräts, der zugehörige Gehäusedeckel 10, eine eine elektrische Signalquelle tragende Trägerplatine 11, eine aufgewickelte Delay-Leitung 12, ein drittes, eine weitere Abdichtung gewährleistendes Isolationselement 13, die einstückig mit den Leitelementen 1, 2 ausgebildeten Sonden, ein Abstandselement 14 und schließlich ein den Abschluß der Sonden bildendes Abschlußelement 15. Die genaue Funktion dieser weiteren Elemente ist für die erfindungsgemäße Lehre nicht maßgeblich, so daß sie hier nicht weiter erläutert wird.

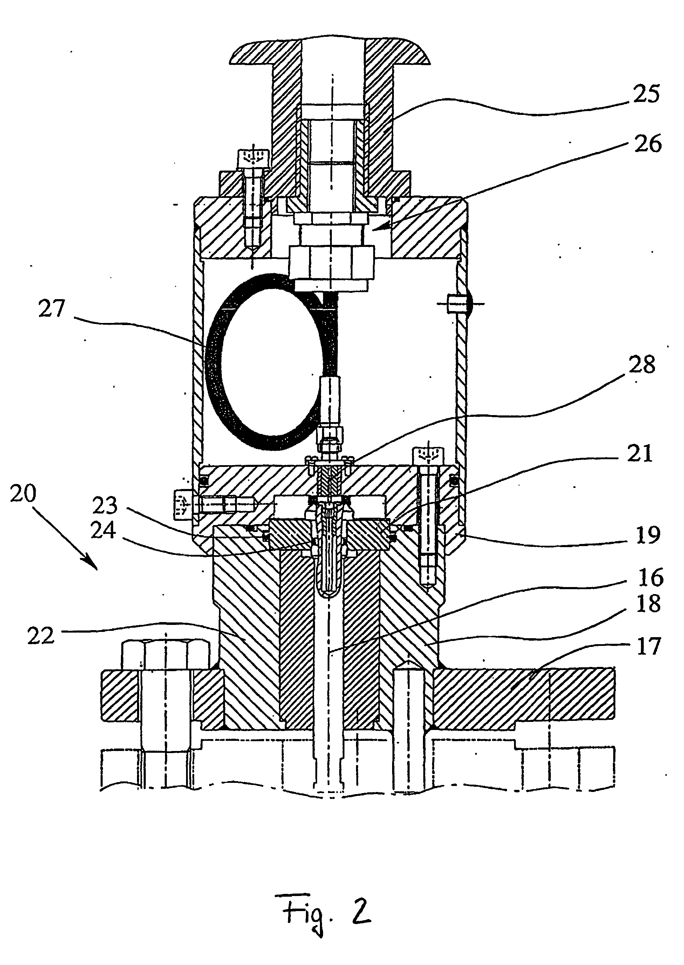

Die Zeichnung zeigt nun in Fig. 2 ein Ausführungsbeispiel einer erfindungsgemäßen Durchführung für ein elektrisches Hochfrequenzsignal ebenfalls in Verbindung mit einem TDR-Meßgerät. Die in Fig. 2 dargestellte erfindungsgemäße Durchführung für ein elektrisches Hochfrequenzsignal gemäß einem Ausführungsbeispiel der Erfindung weist ein das elektrische Hochfrequenzsignal führendes Leitelement 16, ein aus einem Flansch 17, einem Zylinder 18 und einer Abschlußplatte 19 bestehendes mechanisches Trägerelement 20 und zwei zwischen dem Leitelement 16 und dem Trägerelement 20 vorgesehene Isolationselemente 21, 22 auf.

Erfindungsgemäß stimmen die Impedanzen der Isolationselemente 21, 22 im wesentlichen überein, so daß eine Reflektion des elektrischen Hochfrequenzsignals am Übergang zwischen dem ersten Isolationselement 21 und dem zweiten Isolationselement 22 im wesentlichen ausgeschlossen ist.

Da das erste Isolationselement 21 zur Gewährleistung der mechanischen Stabilität der Durchführung gegen äußere Drücke als mechanisch beständige Keramik ausgeführt ist, die gleichzeitig in Zusammenwirkung mit zwei O-Ringen 23, 24 die Dichtigkeit der Durchführung gewährleistet, und da das zweite Isolationselement 22 aus einem chemisch beständigem Kunststoff, nämlich Teflon, besteht, um die Beständigkeit der Durchführung gegenüber agressiven Atmosphären oder Medien zu gewährleisten, da außerdem die Keramik und Teflon unterschiedliche elektrische Eigenschaften haben, sind die geometrischen Abmessungen, hier der Durchmesser der Isolationselemente 21, 22, erkennbar unterschiedlich gewählt, so daß im Ergebnis eine übereinstimmende Impedanz der Isolationselemente 21, 22 gewährleistet ist.

Aus Fig. 2 ist außerdem ohne weiteres zu erkennen, daß sich das zweite Isolationselement 22 an dem ersten Isolationselement 21 als Widerlager gegenüber den in dem Innenraum eines nicht näher dargestellten Behälters vorhandenen Überdrücken abstützt.

Für die erfindungsgemäße Lehre nicht weiter von Bedeutung sind die weiteren in Fig. 2 dargestellten Bauteile eines TDR-Meßgerätes. So ist in Fig. 2 das die elektronischen Komponenten aufnehmende Elektronik-Gehäuse 25 nur andeutungsweise dargestellt. Für den Fall eines Einsatzes des dargestellten TDR-Meßgerätes in einem explosionsgefährdeten Bereich ist in dem Ausführungsbeispiel eine explosionsgeschützte Durchführung 26 dargestellt. Eine Delay-Leitung wird bei dem in Fig. 2 dargestellten Ausführungsbeispiel durch ein aufgewickeltes Kabel 27 zur Verfügung gestellt. Schließlich ist in der Abschlußplatte 19 des mechanischen Trägerelementes 20 noch eine gasdichte Durchführung 28 angeordnet, die eine zusätzliche Sicherheit gewährleistet.

## Patentansprüche

1. Durchführung für ein von einer Signalquelle kommendes elektrisches Hochfrequenzsignal, mit einem das elektrische Hochfrequenzsignal führenden Leiter (16), mit einem mechanischen Trägerelement (20) und mit zwei zwischen dem Leiter (16) und dem Trägerelement (20) vorgesehenen Isolationselementen (21, 22), **dadurch gekennzeichnet, daß** das erste, der elektrischen Signalquelle zugewandte Isolationselement (21) gegenüber dem Leiter (16) und dem Trägerelement (20) abgedichtet ist, aus mechanisch beständiger Keramik besteht und als Widerlager für das zweite Isolationselement (22) dient, das zweite Isolationselement (22) aus einem chemisch beständigen Kunststoff besteht und die geometrischen Abmessungen der Isolationselemente (21, 22) so auf die elektrischen Eigenschaften der Materialien der Isolationselemente (21, 22) abgestimmt sind, daß die Impedanzen der Isolationselemente (21, 22) übereinstimmen.

2. Durchführung nach Anspruch 1, **dadurch gekennzeichnet, daß** das zweite Isolationselement (22) aus Polytetrafluorethylen besteht.

3. Verwendung einer Durchführung nach Anspruch 1 oder 2 für ein Zeitbereichsreflektometer, **dadurch gekennzeichnet, daß** ein elektrisches Hochfrequenzmeßsignal von der elektrischen Signalquelle über die Durchführung in eine Sonde eingekoppelt wird.

4. Verwendung nach Anspruch 3, **dadurch gekennzeichnet, daß** die Impedanz der Durchführung im wesentlichen mit der Impedanz auf dem Signalweg des Zeitbereichsreflektometers übereinstimmt.

## Claims

1. Bushing for an electrical high-frequency signal coming from a signal source having one conductor (16) carrying the high-frequency signal, one mechanical supporting element (20) and two insulating elements (21, 22) provided between the conductor (16) and the mechanical supporting element (20), **characterized in that** the first insulating element (21) facing the signal source is sealed from the conductor (16) and the supporting element (20), consists of mechanically-stable ceramic and serves as an abutment for the second insulating element (22), the second insulating element (22) consists of a chemically-stable plastic and the geometric shapes of the insulating elements (21, 22) are adapted to the electrical features of the materials of the insulating elements (21, 22) so that the impedance of the insulating elements match.

2. Bushing according to claim 1, **characterized in that** the second insulating element (22) consists of polytetrafluorethylene.

3. Use of a bushing according to claim 1 or 2 for a time domain reflector, **characterized in that** an electrical high-frequency measuring signal from the electrical signal source is launched over the bushing in a probe.

4. Use according to claim 3, **characterized in that** the impedance of the bushing is essentially the same as the impedance in the signal path of the time domain reflector.

## Revendications

1. Passage pour un signal électrique haute fréquence provenant d'une source de signaux avec un conducteur (16) acheminant le signal électrique haute fréquence, avec un élément support mécanique (20) et avec deux éléments d'isolement (21, 22) prévus entre le conducteur (16) et l'élément support (20), **caractérisé en ce que** le premier élément d'isolement (21) tourné vers la source de signaux électrique est étanché par rapport au conducteur (16) et l'élément support (20), est composé de céramique mécaniquement résistante. et sert de butée pour le deuxième élément d'isolement (22), que le deuxième élément d'isolement (22) est composé d'une matière plastique chimiquement résistante et que les dimensions géométriques des éléments d'isolement (21, 22) sont adaptées aux propriétés électriques des matériaux des éléments d'isolement (21, 22) de sorte que les impédances des éléments d'isolement (21, 22) correspondent.

2. Passage selon la revendication 1, **caractérisé en ce que** le deuxièmement élément d'isolement (22) est composé de polytétrafluoroéthylène.

3. Utilisation d'un passage selon une des revendications 1 ou 2 pour un réflectomètre optique à balayage temporel **caractérisé en ce que** la source de signaux électrique couple le signal de mesure électrique haute fréquence par le passage dans une sonde.

4. Utilisation selon la revendication 3, **caractérisée en ce que** l'impédance du passage correspond pour l'essentiel à l'impédance sur le réseau du signal du réflectomètre optique à balayage temporel.
